# EUROPÄISCHE PATENTSCHRIFT

(11) **EP 0 692 337 B1**
(45) Veröffentlichungstag und Bekanntmachung des Hinweises auf die Patenterteilung: **02.01.1997**
(21) Anmeldenummer: 95103011.3
(22) Anmeldetag: 03.03.1995
(51) Int. Cl.: B23Q 3/157

(54) **Werkzeugmaschine**
Machine tool
Machine-outil

(30) Priorität: 18.06.1994 DE 4421385
(43) Veröffentlichungstag der Anmeldung: 17.01.1996
(73) Patentinhaber: Chiron-Werke GmbH & Co. KG, D-78532 Tuttlingen (DE)
(72) Erfinder: Haninger, Rudolf, D-78606 Seitingen (DE); Winkler, Hans-Henning, Dr. Ing., D-78532 Tuttlingen (DE)
(74) Vertreter: Otten, Hajo, Dr.-Ing.

(56) Entgegenhaltungen:
- EP-A- 0 342 257
- DE-A- 1 951 043
- DE-A- 2 107 419
- DE-A- 3 521 009
- DE-A- 3 831 869
- DE-C- 3 320 851

## Beschreibung

Die vorliegende Erfindung betrifft eine Werkzeugmaschine mit einer in einem Spindelrohr drehbar gelagerten Spindel, die eine Aufnahmeöffnung zur Aufnahme von Werkzeughaltern aufweist, einem Werkzeugmagazin, in dem eine Mehrzahl von Werkzeughaltern gehalten ist, einer Werkzeugwechselvorrichtung mit zumindest Zwei Greifarmen zum Transportieren von Werkzeughaltern zwischen einer jeweiligen Übergabeposition im Bereich des Werkzeugmagazines und einer für die Greiferarme gemeinsamen Spindelposition unterhalb der Aufnahmeöffnung, und einer an dem Spindelrohr im Sinne einer Hubbewegung längsverschieblich gelagerten, die Werkzeugwechselvorrichtung tragenden Haltevorrichtung zum Überführen des jeweiligen Werkzeughalters von der für die Greiferarme gemeinsamen Spindelposition in seine Arbeitsposition in der Aufnahmeöffnung.

Eine derartige Werkzeugmaschine ist aus der DE-OS-35 21 009 bekannt.

Bei der bekannten Werkzeugmaschine weist das Werkzeugmagazin die Form eines Hufeisens auf. Jedem der beiden Greifarme ist eine eigene Übergabeposition von dem Ende des einen bzw. des anderen Schenkels des Hufeisens zugeordnet. Die beiden Greifarme sind auf unterschiedlichen Seiten des Spindelrohres angeordnet, das sich zwischen den Enden der Schenkel des Magazines befindet.

Die Haltevorrichtung für die beiden Greifarme ist eine an dem Spindelrohr längsverschiebliche Hülse, deren Hubbewegung dazu dient, den unter der Spindel befindlichen Werkzeughalter zwischen seiner Spindelposition und seiner Arbeitsposition zu überführen und gleichzeitig den in der Übergabeposition befindlichen Werkzeughalter entsprechend nach oben oder nach unten zu verfahren und so dessen Übergabe in das Magazin bzw. Entnahme aus dem Magazin zu ermöglichen.

Die beiden Greifarme arbeiten - wie gesagt - auf gegenüberliegenden Seiten des Spindelrohres, und zwar derart, daß, falls sich der eine Greifarm mit seinem Werkzeughalter in der tiefer gelegenen Spindelposition befindet, der andere Greifarm derart seitlich verschwenkt ist, daß dessen Werkzeughalter sich in der Übergabeposition befindet. Durch Verschwenken der Greifarme mittels hydraulisch oder pneumatisch betätigter Kolben-Zylindereinheiten werden die von den Greifarmen gehaltenen Werkzeughalter in ihrer Position vertauscht, so daß sich jetzt der andere Werkzeughalter in der gemeinsamen Spindelposition befindet, während der erste Werkzeughalter nun in seiner ihm zugeordneten Übergabeposition ist.

Mit dieser Werkzeugmaschine ist ein Werkzeugwechsel zwar sehr rasch durchzuführen, allerdings baut eine derartige Maschine beidseits des Spindelrohres sehr breit, da links und rechts vom Spindelstock genügend Raum für die Schwenkbewegung eines jeden Armes zur Verfügung stehen muß.

Es ist jedoch oftmals wünschenswert, bei einer Werkzeugmaschine mehrere Spindelrohre nebeneinander angeordnet auf möglichst geringem Raum unterzubringen. Bei der bekannten Werkzeugmaschine müßte dann der Mindestabstand zwischen zwei Spindelrohren das Doppelte der maximalen seitlichen Schwenkbreite eines Greifarmes betragen. Das würde bei einer Doppelspindelmaschine beispielsweise zu einer sehr breit bauenden Maschine führen.

Um dieses Problem zu beseitigen, ist aus der DE-OS-38 31 869 bereits eine Werkzeugmaschine bekannt, bei der ebenfalls zwei Greifarme und ein Werkzeugmagazin vorgesehen sind, die beiden Greifarme jedoch eine gemeinsame Übergabeposition bedienen. Zu diesem Zweck sind die beiden Greifarme auf gegenüberliegenden Seiten des Spindelrohres angeordnet und werden einander überkreuzend und ausweichend längs komplizierter Ortskurven verschwenkt, die an den Endpunkten zusammentreffen, so daß sich nicht nur eine gemeinsame Spindelposition sondern auch eine gemeinsame Übergabeposition ergibt.

Diese Werkzeugmaschine ist auch für Doppelspindelmaschinen gut geeignet, da sie eine geringe Baubreite aufweist. Die Ortskurven werden zwangsgeführt über ein längsverschiebliches Kulissenelement erreicht, das über zwei Kugelgelenkmechanismen auf die Greifarme einwirkt.

Bei dieser Werkzeugmaschine wird es als nachteilig empfunden, daß die Greifarme und deren Antriebe sehr kompliziert aufgebaut sind, und daß ferner wegen der komplizierten Ortskurven eine gesonderte Übergabevorrichtung erforderlich ist, um die Werkzeughalter zwischen dem in der Übergabeposition befindlichen Greifarm und einem zugeordneten Greifer in dem Werkzeugmagazin zu überführen.

Obwohl sich diese Werkzeugmaschine im Betrieb bewährt hat, wird der Aufbau doch als sehr kompliziert empfunden.

Ausgehend hiervon ist es Aufgabe der vorliegenden Erfindung, eine Werkzeugmaschine zu schaffen, die einen geringen seitlichen Platzbedarf im Bereich der Werkzeugwechselvorrichtung erfordert und dennoch konstruktiv einfach aufgebaut ist.

Erfindungsgemäß wird diese Aufgabe bei der eingangs genannten Werkzeugmaschine dadurch gelöst, daß die Haltevorrichtung an dem Spindelrohr um dessen Längsachse derart drehbar gelagert ist, daß die Greifarme eine gemeinsame Übergabeposition zu dem Werkzeugmagazin aufweisen.

Die der Erfindung zugrunde liegende Aufgabe wird auf diese Weise vollkommen gelöst. Durch die drehbare Hülse können jetzt die zueinander im wesentlichen identischen Greifarme abwechselnd in die gemeinsame Übergabeposition gedreht werden, so daß nur ein Magazin und eine Übergabeposition erforderlich sind. Das Drehen kann in einer Stellung der Haltevorrichtung erfolgen, in der die ausladenden Greifarme nicht mit anderen Teilen der Werkzeugmaschine kollidieren. Damit ist eine überraschende Kombination aus den beiden Werkzeugmaschinen gefunden, wie sie aus den eingangs genannten Druckschriften bekannt sind. Zum einen können die einfachen Greifarme und deren unkomplizierte Betätigungsmechanismen gemäß der DE-OS-35 21 009 verwendet werden, wobei zum anderen nicht auf die weiteren Vorteile des geringen Platzbedarfes und der gemeinsamen Übergabeposition verzichtet werden muß, wie sie aus der DE-OS 38 31 869 bekannt sind.

Dabei ist es besonders bevorzugt, wenn ein Drehantrieb vorgesehen ist, der die Haltevorrichtung wahlweise um die Längsachse zwischen zwei Endstellungen verdreht.

Hier ist von Vorteil, daß nur ein geringer Aufwand an der Peripherie erforderlich ist. Die Haltevorrichtung, die z.B. eine Hülse sein kann, wird nämlich gerade an dem Spindelrohr nach oben bzw. nach unten bewegt, wobei die Hülse in der unteren Stellung durch einen besonderen Antrieb gedreht wird. Dies hat den Vorteil, daß das Magazin in Längsrichtung des Spindelrohres tiefer gelegt sein kann, da das Drehen und Verschwenken der Greifarme erst dann erfolgt, wenn die Hülse ganz nach unten gefahren wurde. Es ist im Bereich des Werkzeugmagazines z.B. nicht mehr erforderlich, einen den Werkzeughalter vor Verschmutzung schützenden Köcher gesondert hochzuziehen, bevor der Werkzeughalter seitlich entnommen wird. Dies war nämlich insbesondere bei der bekannten Verschwenkung der Greifarme über die komplizierten Ortskurven erforderlich, damit der Werkzeughalter überhaupt von seinem jeweiligen Köcher freikommen kann. Bei der neuen Werkzeugmaschine kommt der Werkzeughalter dagegen sozusagen automatisch während des Absenkens der Haltevorrichtung aus dem Köcher frei, wodurch sich die genannte Vereinfachung an der Peripherie ergibt.

Ferner ist es bevorzugt, wenn ein in Abhängigkeit von der Hubbewegung arbeitender Drehmechanismus vorgesehen ist, um die Haltevorrichtung um die Längsachse wahlweise zwischen zwei Endstellungen zu verdrehen.

Hier ist von Vorteil, daß kein gesonderter Antrieb für die Drehbewegung erforderlich ist, sondern daß dies in Abhängigkeit von der Hubbewegung erfolgt. Auf diese Weise vereinfacht sich der konstruktive Aufwand bei der neuen Werkzeugmaschine.

Dabei ist es dann bevorzugt, wenn die Haltevorrichtung eine an dem Spindelrohr auf dessen geschliffener Außenfläche verschieblich und abschnittsweise drehbar gelagerte Hülse umfaßt.

Hier ist von Vorteil, daß die an sich bekannte Hülse und deren sowieso vorgesehene Rundführung auch dazu verwendet werden kann, die Drehbewegung zu realisieren. Mit anderen Worten, der an sich bekannten Hülse wird ein weiterer Freiheitsgrad bezüglich ihrer Drehung um das Spindelrohr verliehen, was überraschenderweise zu den oben bereits beschriebenen Vorteilen führt.

Dabei ist es ferner bevorzugt, wenn der Drehmechanismus einen Verriegelungsstift umfaßt, der wahlweise mit einer auf dem Spindelrohr vorgesehenen Steuerkurve in Eingriff bringbar ist, wobei die Steuerkurve eine derartige Form aufweist, daß bei in Eingriff befindlichem Verriegelungsstift die Haltevorrichtung während der Hubbewegung zwangsweise verdreht wird.

Hier ist von Vorteil, daß lediglich durch das Einkoppeln des Verriegelungsstiftes die Hubbewegung gleichzeitig auch die Drehbewegung auslöst, während bei ausgekoppeltem Verriegelungsstift die Hubbewegung ohne Drehbewegung durchgeführt wird.

Auf diese Weise kann während eines ersten Werkzeugwechsels bei dem Abwärtshub die Haltevorrichtung verdreht werden, wobei nach dem Vertauschen der Positionen der Greifarme während des Aufwärtshubes kein Verdrehen stattfindet. Bei dem sich daran anschließenden zweiten Werkzeugwechsel erfolgt während des Abwärtshubes keine Drehbewegung, während nach dem Vertauschen der Positionen der Greifarme die Drehbewegung nunmehr während des Aufwärtshubes und damit in entgegengesetzte Richtung erfolgt. Mit anderen Worten, die Haltevorrichtung wird zu Beginn eines ersten Werkzeugwechsels um einen bestimmten Winkelbetrag in eine erste Richtung verdreht und verbleibt in dieser Position während der darauffolgenden Bearbeitung eines Werkstückes mit dem eingewechselten Werkzeug. Erst nachdem das nächste Werkzeug eingewechselt wurde, erfolgt während des Aufwärtshubes eine Rückdrehung der Haltevorrichtung in die ursprüngliche Ausgangsposition.

Besonders bevorzugt ist es dabei, wenn an der Haltevorrichtung eine Verriegelungsvorrichtung vorgesehen ist, die die Haltevorrichtung wahlweise drehfest mit dem Spindelrohr kuppelt.

Hier ist von Vorteil, daß auf einfache mechanische Weise dafür gesorgt wird, daß während einer Hubbewegung ohne gewünschte Drehung auch tatsächlich kein ungewolltes Verdrehen der Haltevorrichtung gegenüber dem Spindelrohr stattfindet.

Dabei ist es bevorzugt, wenn die Verriegelungsvorrichtung einen Indexstift aufweist, der wahlweise in eine zu dem Spindelrohr drehfeste aber längsverschiebliche Bohrung eingreift.

Auch diese Maßnahme ist unter konstruktiven Gesichtspunkten von Vorteil, denn durch den Indexstift, der bspw. über eine Kolben-Zylindereinheit betätigt werden kann, kann auf einfache Weise eine wahlweise Verriegelung bewirkt werden.

Ferner ist es bevorzugt, wenn die Steuerkurve S-förmig gebogen ist und ein parallel zu der Längsachse verlaufendes oberes Ende aufweist.

Hier ist von Vorteil, daß der oben bereits erwähnte Köcher den Werkzeughalter in der Übergabeposition dicht umschließen kann, da dieser auch dann zunächst ein kurzes Stück senkrecht nach unten bewegt wird, wenn die Hubbewegung mit der Drehbewegung verbunden ist.

Insgesamt ist es bevorzugt, wenn die beiden Greifarme unter einem Winkel kleiner als 90° und vorzugsweise von ungefähr 60° zueinander um das Spindelrohr herum angeordnet sind.

Hier ist von Vorteil, daß beide Greifarme sozusagen auf einer Seite der Spindelachse angeordnet sind, so daß sich die Baubreite der neuen Werkzeugmaschine noch einmal deutlich reduziert. Eine Doppelspindelmaschine kann jetzt bspw. aus zwei Spindelrohren aufgebaut werden, deren Greifarme und Haltevorrichtungen dafür spiegelbildich zueinander ausgebildet sind, so daß zwischen den beiden Spindelrohren nur ein sehr geringer Platz erforderlich ist. Insgesamt ist damit die Baubreite einer gemäß der Erfindung aufgebauten Doppelspindel-Werkzeugmaschine noch deutlich geringer, als die aus der DE-OS-38 31 869 bekannte Werkzeugmaschine.

Dabei ist es dann bevorzugt, wenn der Verriegelungsstift und die Verriegelungsvorrichtung derart alternierend wirken, daß die Haltevorrichtung während einer Hubbewegung in einer ersten Richtung verdreht wird und während einer Hubbewegung in der entgegengesetzten Richtung drehfest mit dem Spindelrohr gekuppelt ist.

Diese Maßnahme führt zu dem oben bereits diskutierten Vorteil, daß nämlich nur ein Schwenkbereich von 60° erforderlich ist, um den die Hülse und damit die Greifarme um das Spindelrohr herum verdreht werden, so daß insgesamt der Platzbedarf gering ist.

Weitere Vorteile ergeben sich aus der Beschreibung und der beigefügten Zeichnung.

Es versteht sich, daß die vorstehend genannten und die nachstehend noch zu erläuternden Merkmale nicht nur in den jeweils angegebenen Kombinationen, sondern auch in anderen Kombinationen oder in Alleinstellung verwendbar sind, ohne den Rahmen der vorliegenden Erfindung zu verlassen.

Ein Ausführungsbeispiel der Erfindung ist in der Zeichnung dargestellt und wird in der nachfolgenden Beschreibung näher erläutert. Es zeigen:
- Fig. 1: eine erfindungsgemäße Werkzeugmaschine, bei der sich ein erstes Werkzeug in der Spindelposition und ein zweites Werkzeug in der Magazinposition befindet;
- Fig. 2: die Werkzeugmaschine aus Fig. 1, wobei jedoch die Hülse verdreht wurde;
- Fig. 3: die Werkzeugmaschine aus Fig. 2, wobei jedoch die beiden Greifarme ihre Positionen vertauscht haben, so daß sich nunmehr das erste Werkzeug in der Magazinposition und das zweite in der Spindelposition befindet;
- Fig. 4: die Werkzeugmaschine aus Fig. 1 im Ausschnitt im Bereich der Hülse, die teilweise weggebrochen ist, um den Aufbau des Drehmechanismus zu zeigen;
- Fig. 5: eine Werkzeugmaschine wie Fig. 1, jedoch in stark vereinfachter Draufsicht und mit um 60° zueinander beabstandet angeordneten Greifarmen;
- Fig. 6: eine Darstellung wie Fig. 5, wobei die Hülse jedoch abgesenkt und verdreht ist; und
- Fig. 7: eine Darstellung wie Fig. 6, wobei jedoch die beiden Greifarme ihre Position vertauscht haben.

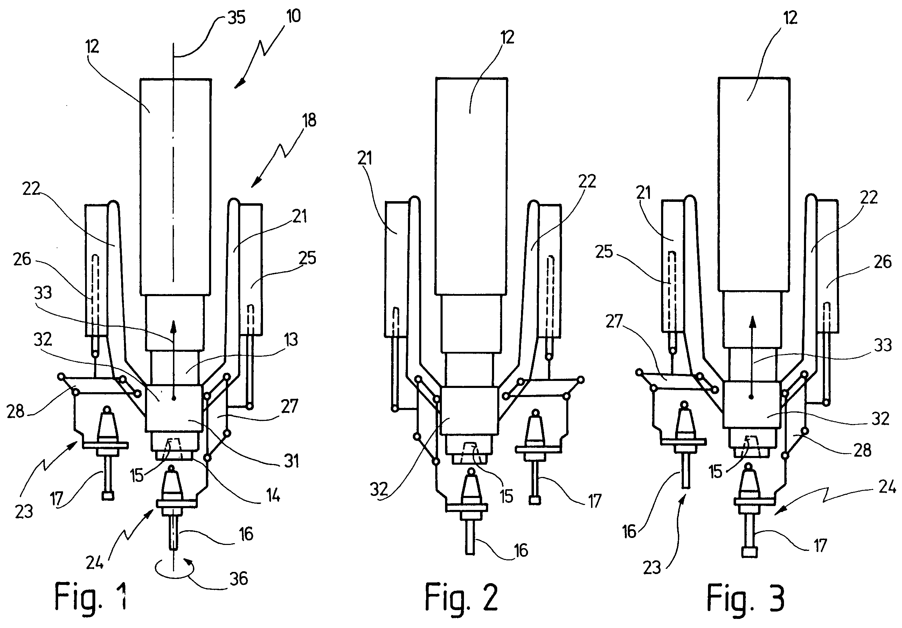

In Fig. 1 ist allgemein mit 10 eine Werkzeugmaschine bezeichnet, die einen Spindelstock 12 aufweist, der an seinem unteren Ende in ein Spindelrohr 13 übergeht. In dem Spindelrohr 13 ist drehbar eine Spindel 14 gelagert, die an ihrem unteren Ende eine Aufnahmeöffnung 15 für Werkzeuge 16, 17 aufweist, wie dies allgemein bekannt ist.

Ferner ist eine Werkzeugwechselvorrichtung 18 vorgesehen, die zwei Greifarme 21 und 22 umfaßt, um die Werkzeughalter 16, 17 zwischen einer Übergabeposition 23 im Bereich eines in Fig. 1 nicht gezeigten Werkzeugmagazines und einer gemeinsamen Spindelposition 24 unterhalb der Aufnahmeöffnung 15 zu transportieren. Zu diesem Zweck umfassen die Greifarme 21, 22 je eine Kolben-Zylindereinheit 25, 26, über die Parallelogrammgestänge 27, 28 betätigt werden. In Fig. 1 ist das Parallelogrammgestänge 27 ausgefahren, so daß der erste Werkzeughalter 16 sich in der Spindelposition 24 befindet. Das Parallelogrammgestänge 28 ist dagegen eingefahren, so daß sich der Werkzeughalter 17 in seiner Übergabeposition 23 befindet.

Die beiden Greifarme 21, 22 sind an einer gemeinsamen Haltevorrichtung 31 befestigt, die in dem gezeigten Ausführungsbeispiel eine Hülse 32 ist, die in Richtung eines Pfeiles 33 längsverschieblich an dem Spindelrohr 13 gelagert ist.

Die insoweit beschriebene Werkzeugmaschine entspricht der aus der DE-PS-33 20 851 bekannten Werkzeugmaschine, deren Inhalt hiermit vollständig zum Gegenstand der vorliegenden Anmeldung gemacht wird.

In Fig. 1 ist bei 35 eine Längsachse des Spindelrohres 13 eingezeichnet, um die herum bei der neuen Werkzeugmaschine 10 aus Fig. 1 die Hülse 32 drehbar ist, wie dies durch einen Pfeil 36 angedeutet ist.

In Fig. 1 ist die Hülse 32 nach unten gefahren, so daß der Werkzeughalter 16 aus der Aufnahmeöffnung 15 freigekommen ist. Für den weiteren Werkzeugwechselvorgang wird jetzt die Hülse 32 um 180° gedreht, so daß sich die in Fig. 2 gezeigte Stellung ergibt. Während sich der ausgestoßene Werkzeughalter 16 immer noch unter der Aufnahmeöffnung 15 befindet, liegt der einzuwechselnde Werkzeughalter 17 jetzt diametral zu seiner früheren Übergabeposition 23.

Jetzt wird das Parallelogrammgestänge 27 eingefahren und gleichzeitig das Parallelogrammgestänge 28 ausgefahren, so daß sich die Stellungen bzw. Positionen der beiden Greifarme 21 und 22 gerade vertauschen. Der zweite Werkzeughalter 17 befindet sich jetzt in der Spindelposition 24, während sich der erste Werkzeughalter 16 in der Übergabeposition 23 befindet. Durch Ausführen eines Hubes in Hubrichtung 33 überführt die Hülse 32 jetzt den Werkzeughalter 17 in die Aufnahmeöffnung 15 und den Werkzeughalter 16 in eine Position im Bereich des nicht gezeigten Werkzeugmagazines.

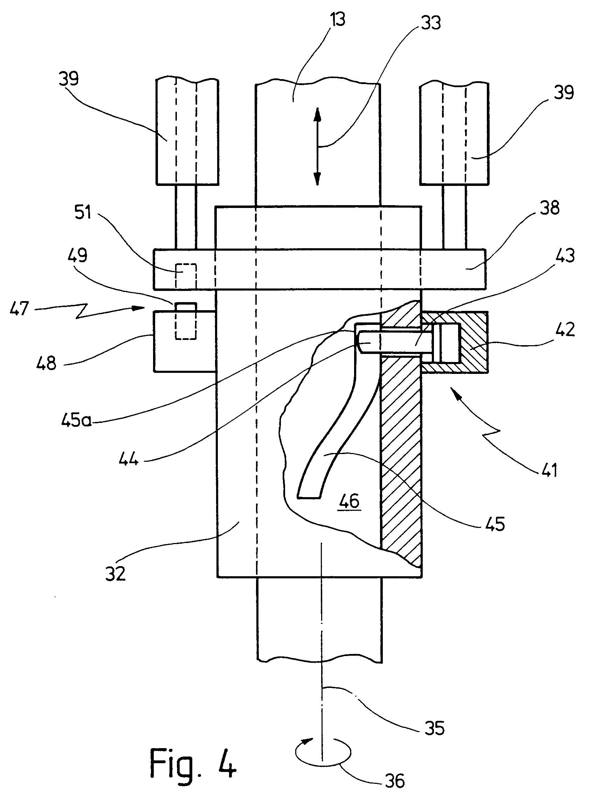

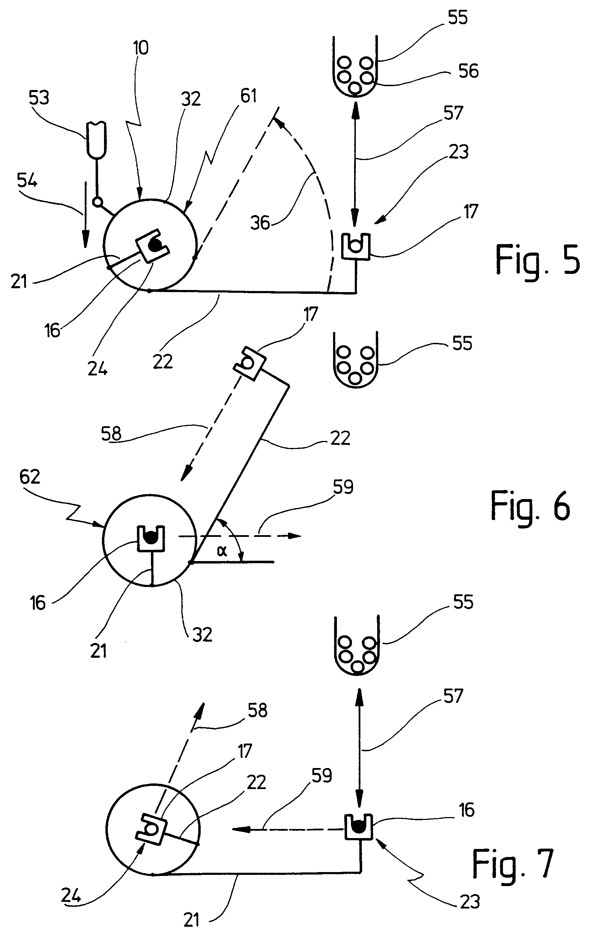

Bei der in den Figuren 1 - 3 gezeigten Werkzeugmaschine liegen die beiden Greifarme 21, 22 einander bezogen auf die Längsachse 35 des Spindelrohres 13 diametral gegenüber, so daß die Hülse 32 eine Drehung um 180° durchführt. Je nach Ausgestaltung kann der radiale Abstand zwischen den beiden Greifarmen 21, 22 jedoch auch deutlich kleiner als 180° sein. Das Verdrehen der Hülse 32 während der Hubbewegung kann entweder über eine eigene Drehantriebsvorrichtung erfolgen, wie dies weiter unten noch im Zusammenhang mit den Figuren 5 - 7 erklärt werden wird, es ist jedoch auch möglich, die Drehbewegung zwangsweise während des Hubes auszuführen, wie dies nunmehr im Zusammenhang mit Fig. 4 beschrieben wird.

Fig. 4 zeigt eine ausschnittsweise Darstellung der Werkzeugmaschine aus Figuren 1 - 3 im Bereich der Hülse 32, wobei weitere Details gezeigt sind und die Hülse 32 teilweise weggebrochen ist.

An der Hülse 32 ist ein Ring 38 befestigt, an dem Kolben-Zylindereinheiten 39 angreifen, über die die Hülse 32 in Richtung des Pfeiles 33 verstellt werden kann.

In dem weggebrochenen Teil der Hülse 32 ist ein Drehmechanismus 41 dargestellt, über den die Hubbewegung in eine Drehbewegung umgesetzt werden kann. Zu diesem Zweck ist eine weitere Kolben-Zylindereinheit 42 vorgesehen, die einen Verriegelungsstift 43 verschiebt, der an seinem vorderen Ende die Form einer Rolle 44 aufweist. Über die Kolben-Zylindereinheit 43 ist die Rolle 44 wahlweise mit einer Steuerkurve 45 in Eingriff bringbar, die in der geschliffenen Außenfläche 46 des Spindelrohres 13 vorgesehen ist. Die Steuerkurve 45 weist einen S-förmigen Verlauf auf und erstreckt sich radial über ca. 60° des Umfanges des Spindelrohres 13. In Richtung der Längsachse 35 entspricht die Ausdehnung der Steuerkurve 45 dem maximalen Hub, den die Hülse 32 durchführt.

An ihrem oberen Ende 45a weist die Steuerkurve 45 einen Abschnitt auf, der parallel zu der Längsrichtung 35 verläuft, so daß die Drehbewegung der Hülse 32 erst einsetzt, wenn diese sich bereits teilweise abgesenkt hat. Auf diese Weise wird dafür gesorgt, daß die Werkzeughalter 16, 17 zunächst während des Absenkens der Hülse 32 senkrecht nach unten aus der Aufnahmeöffnung 15 bzw. einem Köcher im Werkzeugmagazin freikommen, bevor sie verdreht werden. Der obere gerade Abschnitt 45a der Steuerkurve 45 verhindert es also, daß die Werkzeughalter 16, 17 verklemmen können.

Wenn der Verriegelungsstift 43 aus der Steuerkurve 45 zurückgezogen ist, erfolgt selbstverständlich keine Verdrehung der Hülse 32. Um in diesem Zustand auch ein unbeabsichtigtes Verdrehen der Hülse 32 zu verhindern, ist eine Verriegelungsvorrichtung 47 vorgesehen, über die die Hülse 32 drehfest mit dem Spindelrohr 13 gekuppelt werden kann. Die Verriegelungsvorrichtung 47 umfaßt eine Kolben-Zylindereinheit 48, die einen Indexstift 49 wahlweise mit einer Bohrung 51 in Eingriff bringt, die an dem Ring 38 vorgesehen ist. Da der Ring 38 drehfest mit den Kolben-Zylindereinheiten 39 verbunden ist, die wiederum genauso wie das Spindelrohr 13 fester Teil der neuen Werkzeugmaschine 10 sind, wird auf diese Weise die Hülse 32 drehfest mit dem Spindelrohr 13 gekuppelt. Damit es während eines Verdrehens der Hülse 32 nicht zu einem Verklemmen kommt, ist der Ring 38 selbstverständlich drehbar an der Hülse 32 gelagert.

Die Steuerung des Drehmechanismus 41 und der Verriegelungsvorrichtung 47 erfolgt derart, daß entweder der Indexstift 49 in Eingriff mit der Bohrung 51 oder aber die Rolle 44 in Eingriff mit der Steuerkurve 45 ist. Aufgabe der Rolle 44 ist es übrigens, Reibungskräfte während der zwangsgeführten Drehung der Hülse 32 zu vermeiden.

Bei der schematischen Darstellung der in den Figuren 5 - 7 in Draufsicht gezeigten Werkzeugmaschine 10 können entweder der Drehmechanismus 41 sowie die Verriegelungsvorrichtung 47 gemäß Fig. 4 oder aber ein gesonderter Drehantrieb 53 vorgesehen sein, wie dies in Fig. 5 angedeutet ist. Der Drehantrieb 53 setzt eine Linearbewegung 54 in eine Drehung der Hülse 32 um; seine Verwendung wird weiter unten erläutert werden, zunächst soll der Betrieb mit Drehmechanismus 41 beschrieben werden.

Fig. 5 zeigt den Zustand, wie er auch in Fig. 1 gezeigt wurde, der erste Werkzeughalter 16 befindet sich in der Spindelposition 24, während sich ein zweiter Werkzeughalter 17 in der Übergabeposition 23 in der Nähe eines Werkzeugmagazines 55 befindet. In dem Werkzeugmagazin 55 sind weitere Werkzeughalter 56 vorgesehen, die in Richtung eines Pfeiles 57 gegen den Werkzeughalter 17 ausgetauscht werden können.

Es sei angenommen, daß das von dem Werkzeughalter 16 gehaltene Werkzeug die Bearbeitung eines nicht gezeigten Werkstückes gerade beendet hat und daß der Werkzeughalter 17 das Werkzeug trägt, das als nächstes in die Aufnahmeöffnung 15 eingesetzt werden soll. Um dies zu erreichen, wird die Hülse 32 abgesenkt, so daß der Werkzeughalter 16 aus der Aufnahmeöffnung 15 freikommt. Am Ende der Hubbewegung wird die Hülse 32 in Richtung des Pfeiles 36 verschwenkt, so daß nunmehr die in Fig. 6 gezeigte Position eingenommen wird. Es sei bemerkt, daß bei Verwendung des Drehmechanismus 41 aus Fig. 4 das Verschwenken in Richtung des Pfeiles 36 während der Absenkung der Hülse 32 erfolgt, während bei Verwendung des Drehantriebes 53 dieses Verschwenken erst nach Beendigung der Hubbewegung bewirkt wird.

Bei der in den Figuren 5 - 7 gezeigten Werkzeugmaschine sind die Greifarme 21, 22 um die Hülse 32 herum um einen Winkel von ungefähr 60° beabstandet, so daß auch die Drehbewegung der Hülse 32 gerade 60° betragen muß. Dieser Winkel ist in Fig. 6 mit α bezeichnet.

In der in Fig. 6 gezeigten Stellung erfolgt jetzt als nächstes das Vertauschen der Positionen der Greifarme 21, 22. Der Greifarm 22 bewegt den Werkzeughalter 17 längs einer Wechselbewegung 58 unter die Spindel, während gleichzeitig der Greifarm 21 den Werkzeughalter 16 längs einer Wechselbewegung 59 verschwenkt. Diese Wechselbewegungen 58, 59 können bei kleinen Werkzeugen gleichzeitig erfolgen, während aus Gründen der Kollisionsgefahr bei großen Werkzeugen Zunächst die Wechselbewegung 59 und dann die Wechselbewegung 58 durchgeführt werden.

Es sei noch bemerkt, daß beim Übergang von Fig. 5 zu Fig. 6 die Hülse 32 aus einer ersten Endstellung 61 in eine zweite Endstellung 62 überführt wurde, wobei sich die beiden Endstellungen 61, 62 gerade um den Winkel α unterscheiden.

Nachdem die Wechselbewegungen 58, 59 durchgeführt wurden, ergibt sich die in Fig. 7 gezeigte Stellung, der Werkzeughalter 16 befindet sich in der Übergabeposition 23, während sich der Werkzeughalter 17 nunmehr in der Spindelposition 24 vorfindet. Die Hülse 32 wird jetzt ohne Drehen nach oben gefahren, so daß der Werkzeughalter 17 in die Aufnahmeöffnung 15 eingreifen kann. Bei Verwendung der Vorrichtung aus Fig. 4 bedeutet dies, daß der Indexstift 49 in die Bohrung 51 eingreift, während die Rolle 44 aus der Steuerkurve 45 freikommt.

Wenn die Bearbeitung des Werkstückes durch das von dem Werkzeughalter 17 gehaltene Werkzeug beendet ist, erfolgt der nächste Werkzeugwechsel, der zu dem vorher beschriebenen genau umgekehrt verläuft.

Zunächst wird die Hülse 32 wieder abgesenkt, wobei sie jedoch nicht verdreht wird. Danach erfolgen die Wechselbewegungen 58, 59 der Greifarme 22, 21, so daß wieder die Stellung aus Fig. 6 erreicht wird. Beim Hochfahren der Hülse 32 wird jetzt die Drehbewegung durchgeführt, so daß schließlich wieder die in Fig. 5 gezeigte Stellung eingenommen wird.

Mit anderen Worten, eine Drehung der Hülse 32 erfolgt zu Beginn des ersten und am Ende des zweiten Werkzeugwechsels in die entgegengesetzte Richtung, so daß die Hülse 32 immer zwischen den Endstellungen 61 und 62 hin- und hergedreht wird.

Bei Verwendung des gesonderten Drehantriebes 53, wie er in Fig. 5 gezeigt ist, lassen sich weitere Vorteile erzielen, die insgesamt zu einer Zeitersparnis führen. Beim Übergang von Fig. 5 zu Fig. 6 und Fig. 7 wird die Hülse 32 zunächst abgesenkt und dann über den Drehantrieb 53 in Richtung des Pfeiles 36 gedreht. Gleichzeitig kann jetzt ein Vertauschen der Positionen der Greifarme 21, 22 erfolgen, so daß die Wechselbewegungen 58, 59 während des Verdrehens der Hülse 32 in Richtung des Pfeiles 36 erfolgen. Während bei Verwendung des Drehmechanismus 41 das Absenken und Drehen zeitgleich erfolgt, schafft der gesonderte Drehantrieb 53 die Möglichkeit, das Verdrehen der Hülse 32 und das Verschwenken der Greifarme 21, 22 zeitgleich durchzuführen, was zu einer großen Zeitersparnis führt.

Darüber hinaus kann der gesonderte Drehantrieb 53 so ausgelegt werden, daß die Hülse 32 in Abhängigkeit vom Gewicht der Werkzeuge unterschiedlich schnell verdreht wird. Im einfachsten Falle weist der Drehantrieb 2 Geschwindigkeiten auf, wobei bei schwereren Werkzeugen mit langsamerer Geschwindigkeit gedreht wird.

Aus den Figuren 5 - 7 wird deutlich, daß links neben die Hülse 32 eine weitere Hülse gesetzt werden kann, deren Greifarme gerade spiegelbildich zu den Greifarmen 21, 22 angeordnet sind, so daß die gesamte Breite einer derartigen Doppelspindel-Werkzeugmaschine gerade um den Durchmesser der Hülse 32 größer ist als es bei der in den Figuren 1 - 3 gezeigten Werkzeugmaschine der Fall wäre, wo die beiden Greifarme 21, 22 einander diametral gegenüberliegen.

## Patentansprüche

1. Werkzeugmaschine mit einer in einem Spindelrohr (13) drehbar gelagerten Spindel (14), die eine Aufnahmeöffnung (15) zur Aufnahme von Werkzeughaltern (16, 17) aufweist, einem Werkzeugmagazin (55), in dem eine Mehrzahl von Werkzeughaltern (56) gehalten ist, einer Werkzeugwechselvorrichtung mit zwei Greiferarmen (21, 22) (18) zum Transportieren von Werkzeughaltern (16, 17) zwischen einer jeweiligen Übergabeposition (23) im Bereich des Werkzeugmagazines (55) und einer für die Greiferarme (21, 22) gemeinsamen Spindelposition (24) unterhalb der Aufnahmeöffnung (15), und einer an dem Spindelrohr (13) im Sinne einer Hubbewegung (3) längsverschieblich gelagerten, die Werkzeugwechselvorrichtung (18) tragenden Haltevorrichtung (31) zum Überführen des jeweiligen Werkzeughalters (16) von der für die Greiferarme gemeinsamen Spindelposition (24) in seine Arbeitsposition in der Aufnahmeöffnung (15),
dadurch gekennzeichnet, daß die Haltevorrichtung (31) an dem Spindelrohr (13) um dessen Längsachse (35) derart drehbar gelagert ist, daß die Greifarme (21, 22) eine gemeinsame Übergabeposition zu dem Werkzeugmagazin (55) aufweisen.

2. Werkzeugmaschine nach Anspruch 1, dadurch gekennzeichnet, daß ein Drehantrieb (53) vorgesehen ist, der die Haltevorrichtung (31) wahlweise um die Längsachse (35) zwischen zwei Endstellungen (61, 62) verdreht.

3. Werkzeugmaschine nach Anspruch 1, dadurch gekennzeichnet, daß ein in Abhängigkeit von der Hubbewegung (33) arbeitender Drehmechanismus (41) vorgesehen ist, um die Haltevorrichtung (31) um die Längsachse (35) wahlweise zwischen zwei Endstellungen (61, 62) zu verdrehen.

4. Werkzeugmaschine nach einem der Ansprüche 1 bis 3, dadurch gekennzeichnet, daß die Haltevorrichtung (31) eine an dem Spindelrohr (13) auf dessen geschliffener Außenfläche (46) verschieblich und abschnittsweise drehbar gelagerte Hülse (32) umfaßt.

5. Werkzeugmaschine nach Anspruch 3 oder 4, dadurch gekennzeichnet, daß der Drehmechanismus (41) einen Verriegelungsstift (43) umfaßt, der wahlweise mit einer auf dem Spindelrohr (13) vorgesehenen Steuerkurve (45) in Eingriff bringbar ist, wobei die Steuerkurve (45) eine derartige Form aufweist, daß bei in Eingriff befindlichem Verriegelungsstift (43) die Haltevorrichtung (31) während der Hubbewegung (33) zwangsweise verdreht wird.

6. Werkzeugmaschine nach einem der Ansprüche 1 bis 5, dadurch gekennzeichnet, daß an der Haltevorrichtung (31) eine Verriegelungsvorrichtung (47) vorgesehen ist, die die Haltevorrichtung (31) wahlweise drehfest mit dem Spindelrohr (13) kuppelt.

7. Werkzeugmaschine nach Anspruch 6, dadurch gekennzeichnet, daß die Verriegelungsvorrichtung (47) zumindest einen Indexstift (49) aufweist, der wahlweise in eine zu dem Spindelrohr (13) drehfeste aber längsverschiebliche Bohrung (51) eingreift.

8. Werkzeugmaschine nach einem der Ansprüche 5 bis 7, dadurch gekennzeichnet, daß die Steuerkurve (45) S-förmig gebogen ist und ein parallel zu der Längsachse (35) verlaufendes oberes Ende (45a) aufweist.

9. Werkzeugmaschine nach einem der Ansprüche 1 bis 8, dadurch gekennzeichnet, daß die beiden Greifarme (21, 22) unter einem Winkel (α) kleiner als 90° und vorzugsweise von ungefähr 60° zueinander um das Spindelrohr (13) herum angeordnet sind.

10. Werkzeugmaschine nach Anspruch 5 und einem der Ansprüche 6 bis 9, dadurch gekennzeichnet, daß der Verriegelungsstift (43) und die Verriegelungsvorrichtung (47) derart alternierend wirken, daß die Haltevorrichtung (31) während einer Hubbewegung (33) in einer ersten Richtung verdreht wird und während einer Hubbewegung (33) in der entgegengesetzten Richtung drehfest mit dem Spindelrohr (13) gekuppelt ist.

## Claims

1. Machine tool comprising a spindle (14) rotatably supported at a spindle tube (13) and having a receiving opening (15) for locating tool holders (16, 17), a tool magazine (55) carrying a plurality of tool holders (56), a tool changer device (18) having two gripper arms (21, 22), for transporting tool holders (16, 17) between a respective transfer position (23) located in the area of the tool magazine (55) and a spindle position (24) common to the gripper arms (21, 22) and located beneath the receiving opening (15), and a holding device (31) bearing said tool changer device (18) and supported at said spindle tube (13) for longitudinal movement with respect to the latter in the sense of a stroke movement, said holding device (31) provided for transferring the respective tool holder (16) from said spindle position (24) common to said gripper arms into the working position of the tool holder in the receiving opening (15),
characterized in that the holding device (31) is supported at said spindle tube (13) for rotation about the longitudinal axis (35) of the latter such that said gripper arms (21, 22) have a common transfer position to said tool magazine (55).

2. Machine tool according to claim 1, characterized in that a rotary actuator (53) is provided which optionally rotates the holding device (31) about said longitudinal axis (35) between two end positions (61, 62).

3. Machine tool according to claim 1, characterized in that a rotary mechanism (41) is provided which functions in response to the stroke movement (33), for optionally rotating the holding device (31) about said longitudinal axis (35) between two end positions (61, 62).

4. Machine tool according to any of claims 1 through 3, characterized in that the holding device (31) comprises a sleeve (32) borne on the outer ground surface (46) of the spindle tube (13) such that it is movable and rotatable in sections.

5. Machine tool according to claim 3 or claim 4, characterized in that said rotary mechanism (41) comprises a locking pin (43) which can be optionally engaged with a control cam (45) provided at said spindle tube (13), said control cam (45) being provided with a shape such that the holding device (31) is forced to rotate during the stroke movement (33) if the locking pin (43) is engaged.

6. Machine tool according to any of claims 1 through 5, characterized in that at said holding device (31) a locking device (47) is provided which optionally locks the holding device (31) with said spindle tube (13).

7. Machine tool according to claim 6, characterized in that the locking device (47) comprises at least one indexing pin (49) which optionally engages in a bore hole (51) which cannot be rotated around but slide along the spindle tube (13).

8. Machine tool according to any of claims 5 through 7, characterized in that the control cam (45) is bent into an S-shape and has a top end (45a) running parallel to the longitudinal axis (35).

9. Machine tool according to any of claims 1 through 8, characterized in that the two gripper arms (21, 45) are arranged at an angle (α) of less than 90° and preferably of approximately 60° to each other around the spindle tube (13).

10. Machine tool according to claim 5 and any of claims 6 through 9, characterized in that the locking pin (43) and the locking device (47) operate alternately in such a way that the holding device (31) is being rotated in a first direction during a stroke movement (33) and locked to the spindle tube (13) unrotatably with respect to the latter during a stroke movement (33) in the opposite direction.

## Revendications

1. Machine-outil comportant une broche (14) montée rotative dans une poupée (13), qui présente une ouverture de réception (15) destinée à recevoir des supports d'outil (16, 17), un magasin à outils (55) dans lequel est tenue une pluralité de supports d'outil (56), un dispositif de changement d'outil (18) avec deux bras preneurs (21, 22) pour le transport des supports d'outil (16, 17) entre une position de transfert respective (23) au niveau du magasin d'outil (55) et une position de broche (24) commune aux bras preneurs (21, 22) sous l'ouverture de réception (15), et un dispositif de retenue (31) portant le dispositif de changement d'outil (18) et monté mobile longitudinalement sur la poupée (13) dans le sens d'un mouvement de levée (33), pour transférer le support d'outil respectif (16) de la position de broche (24) commune aux bras preneurs à sa position de travail dans l'ouverture de réception (15), caractérisée en ce que le dispositif de retenue (31) est monté mobile en rotation autour de son axe longitudinal (35) sur la poupée (13) de telle manière que les bras preneurs (21, 22) présentent une position de transfert commune par rapport au magasin d'outils (55).

2. Machine-outil selon la revendication 1, caractérisée en ce qu'un entraînement rotatif (53) est prévu, qui fait tourner le dispositif de retenue (31) au choix autour de l'axe longitudinal (35) entre deux positions finales (61, 62).

3. Machine-outil selon la revendication 1, caractérisée en ce qu'un mécanisme de rotation (41) travaillant en fonction du mouvement de levée (33) est prévu, pour faire tourner le dispositif de retenue (31) au choix autour de l'axe longitudinal (35) entre deux positions finales (61, 62).

4. Machine-outil selon l'une des revendications 1 à 3, caractérisée en ce que le dispositif de retenue (31) comporte une douille (32) montée sur la poupée (13) de manière coulissante sur la surface extérieure polie (46) de cette dernière, et de manière rotative par sections.

5. Machine-outil selon la revendication 3 ou 4, caractérisée en ce que le mécanisme de rotation (41) comporte un ergot de verrouillage (43), qui peut être mis en prise au choix avec une came de commande (45) prévue sur la poupée (13), la came de commande (45) présentant une forme telle que, lorsque l'ergot de verrouillage (43) se trouve en prise, le dispositif de retenue (31) est tourné de manière forcée pendant le mouvement de levée (33).

6. Machine-outil selon l'une des revendications 1 à 5, caractérisée en ce qu'il est prévu sur le dispositif de retenue (31) un dispositif de verrouillage (47), qui accouple le dispositif de retenue (31) au choix de manière solidaire en rotation à la poupée (13).

7. Machine-outil selon la revendication 6, caractérisée en ce que le dispositif de verrouillage (47) présente au moins un doigt d'indexage (49) qui, au choix, se met en prise dans un perçage (51) solidaire en rotation de la poupée (13) mais mobile longitudinalement.

8. Machine-outil selon l'une des revendications 5 à 7, caractérisée en ce que la came de commande (45) est contrée en S et présente une extrémité supérieure (45a) parallèle à l'axe longitudinal (35).

9. Machine-outil selon l'une des revendications 1 à 8, caractérisée en ce que les deux bras preneurs (21, 22) sont placées autour de la poupée (13) en formant un angle (α) inférieur à 90°, et de préférence d'environ 60°, l'un par rapport à l'autre.

10. Machine-outil selon la revendication 5 et l'une des revendications 6 à 9, caractérisée en ce que l'ergot de verrouillage (43) et le dispositif de verrouillage (47) agissent de manière alternée, de telle sorte que le dispositif de retenue (31) est tourné dans une première direction pendant un mouvement de levée (33), et est accouplé à la poupée (13) de manière solidaire en rotation pendant un deuxième mouvement de levée
(33) dans la direction inverse.
